# EUROPÄISCHE PATENTSCHRIFT

(11) **EP 2 566 654 B1**
(45) Veröffentlichungstag und Bekanntmachung des Hinweises auf die Patenterteilung: **28.06.2017**
(21) Anmeldenummer: 11718038.0
(22) Anmeldetag: 02.05.2011
(51) Int. Cl.: B23K 26/18, B23K 26/26, B23K 26/32, B23K 31/02, B23K 26/20, C21D 9/50

(54) **VERFAHREN ZUR HERSTELLUNG MASSGESCHNEIDERTER, WARM UMZUFORMENDER GESCHWEISSTER STAHLBLECHPRODUKTE ; ENTSPRECHENDES GESCHWEISSTES PRODUKT**
METHOD OF PRODUCING CUSTOM MADE, WELDED SHEET STEEL PRODUCTS TO BE WARM FORMED AND CORRESPONDING WELDED PRODUCT
PROCÉDÉ DE PRODUCTION DE PRODUITS EN TÔLE D'ACIER SOUDÉS, FAÇONNABLES À CHAUD, COUPÉS À DIMENSION; PRODUIT SOUDÉ CORRESPONDANT

(30) Priorität: 03.05.2010 DE 102010019258
(43) Veröffentlichungstag der Anmeldung: 13.03.2013
(73) Patentinhaber: WISCO Tailored Blanks GmbH, 47259 Duisburg (DE)
(72) Erfinder: BRANDT, Max, 47051 Duisburg (DE); BOTH, Christian, 47119 Duisburg (DE); SCHAFTINGER, Dietmar, 47495 Rheinberg (DE); DORNSCHEIDT, Christian, 40629 Düsseldorf (DE)
(74) Vertreter: Cohausz & Florack
(86) Internationale Anmeldenummer: PCT/EP2011/056963
(87) Internationale Veröffentlichungsnummer: WO 2011/138278

(56) Entgegenhaltungen:
- EP-A1- 0 454 861
- WO-A1-02/34456
- WO-A1-2010/045571
- WO-A1-2010/068804
- WO-A2-2008/068346
- DE-A1-102008 044 523
- JP-A- 60 180 686
- DATABASE WPI Week 198451 Thomson Scientific, London, GB; AN 1984-315359 XP002655707, -& JP 59 197390 A (TOKYO SHIBAURA DENKI KK) 8. November 1984 (1984-11-08)

## Beschreibung

Die Erfindung betrifft ein Verfahren zur Herstellung von Stahlblechprodukten, bei dem Mangan-Bor-Stahlplatinen oder Mangan-Bor-Stahlbänder unterschiedlicher Dicke und/oder Werkstoffgüte miteinander entlang eines durch Kanten der Stahlplatinen oder Stahlbänder gebildeten Fügestoßes verschweißt werden, sowie ein Stahlblechprodukt (Halbzeug), welches zur Herstellung eines warm umgeformten Bauteils bestimmt und aus miteinander entlang eines Fügestoßes verschweißter Mangan-Bor-Stahlplatinen oder Mangan-Bor-Stahlbänder unterschiedlicher Dicke und/oder Werkstoffgüte zusammengesetzt ist (siehe, z.B., WO2010/045571 A1).

Im heutigen modernen Fahrzeugbau werden miteinander verschweißte Blechplatinen verwendet, welche aus verschiedenen Blechdicken und/oder Werkstoffgüten zusammengesetzt sind. Dies ermöglicht, verschiedene Stellen des späteren Bauteils an lokale Belastungen anzupassen, was ansonsten zusätzliche Verstärkungsteile erfordert. Dadurch lässt sich das Gewicht des betreffenden Bauteils reduzieren. Ferner lassen sich Fertigungskosten einsparen. Das Verbinden der Blechplatinen erfolgt in der Regel als Stumpfstoß mittels Laserschweißen. Derartige Blechplatinen werden als "Tailored Blanks" oder "Tailored Welded Blanks" (maßgeschneiderte geschweißte Platinen) bezeichnet. Durch eine gezielte Beeinflussung des Schweißprozesses, insbesondere durch schroffe Abkühlung der Schweißnaht mit Wasser nach dem Fügeprozess wird eine Aufhärtung der Schweißnaht erzielt, wodurch die Bruchempfindlichkeit der Schweißnaht reduziert (Vermeidung von Härteeinbrüchen) und deren Festigkeit erhöht werden kann, zumindest die gleiche Festigkeit wie in den Grundwerkstoffen eingestellt werden kann. Werden Tailored Blanks mittels Warmumformung zu einem dreidimensionalen Bauteil umgeformt, so wird jedoch das Gefüge der Schweißnaht in Folge der Wärmebehandlung des verschweißten Halbzeuges homogenisiert. Aufgrund von ungünstigen Abkühlbedingungen oder mangelnder Formschlüssigkeit zwischen Umformwerkzeug und Werkstück kann es zu einer unvollständigen Umwandlung von Austenit in Martensit und einer voreutektoiden Ferritausscheidung mit der Folge von Härteverlusten im Vergleich zu den Grundwerkstoffen kommen.

Der vorliegenden Erfindung liegt die Aufgabe zugrunde, ein Verfahren zur Herstellung maßgeschneiderter, warm umzuformender Stahlblechprodukte sowie ein entsprechendes Stahlblechprodukt als Halbzeug bereitzustellen, mit dem es möglich ist, die Festigkeit der Schweißnaht gegenüber den Grundwerkstoffen der zu verbindenden Stahlbleche zumindest auf ein gleiches Niveau einzustellen, so dass Härteeinbrüche in der Schweißnaht auch nach einer Warmumformung unter vorheriger Erhitzung auf Austenitisierungstemperatur abgefangen werden können.

Gelöst wird diese Aufgabe durch ein Verfahren mit den Merkmalen des Anspruchs 1 bzw. durch ein Stahlblechprodukt (Halbzeug) mit den Merkmalen des Anspruchs 9.

Das erfindungsgemäße Verfahren ist dadurch gekennzeichnet, dass vor dem Schweißprozess auf mindestens eine Schweißkante der miteinander zu verschweißenden Stahlplatinen oder Stahlbänder zumindest partiell eine viskose Flüssigkeit, insbesondere Paste, oder ein fester, pulverartiger oder aerosolartiger Stoff aufgetragen wird, die bzw. der mindestens eine die Festigkeit der zu erzeugenden Schweißnaht erhöhende Komponente enthält und hinsichtlich ihres/seines Kohlenstoffgehalts so ausgewählt und/oder eingestellt wird, dass die Schweißnaht nach schroffem Abkühlen, Erwärmen auf eine Temperatur oberhalb der Austenitisierungstemperatur und erneutem schroffen Abkühlen eine Festigkeit aufweist, die im Bereich von 1500 MPa bis 2000 MPa, vorzugsweise im Bereich von 1700 MPa bis 1900 MPa liegt, wobei durch das Auftragen der viskosen Flüssigkeit oder des festen, pulverartigen oder aerosolartigen Stoffs der Massenanteil des Kohlenstoffs in der Schweißnaht auf 0,25 bis 0,40 Gew.-%, vorzugsweise auf 0,30 bis 0,40 Gew.-% erhöht wird.

Mittels der Einbringung mindestens einer die Festigkeit der zu erzeugenden Schweißnaht erhöhenden Komponente über mindestens eine der den Fügestoß definierenden Stahlblechkanten in das flüssige Schweißschmelzbad wird gezielt ein in seiner chemischen Zusammensetzung differenziert verändertes Primärgefüge im Vergleich zu den Gefügen der verbundenen Grundwerkstoffe hergestellt, welches nach schroffer Abkühlung im Schweißprozess (zum Beispiel durch Abschreckung mit Wasser), Aufheizung im Warmumformprozess (Wärmebehandlung oberhalb der Austenistisierungstemperatur) und Abkühlung im Umformprozess (direktes Warmumformen bzw. Presshärten), aber auch in den Prozessschritten einer indirekten Warmumformung, ein vorzugsweise härteres Sekundärgefüge aufweist als die durch die Schweißung verbundenen Grundwerkstoffe, mindestens aber ein härteidentisches Gefüge.

Das erfindungsgemäße Stahlblechprodukt (Halbzeug) ist dementsprechend dadurch gekennzeichnet, dass dessen Schweißnaht einen Kohlenstoffgehalt von mindestens 0,25 bis 0,40 Gew.-%, vorzugsweise von mindestens 0,30 bis 0,40 Gew.-% aufweist, wobei die Schweißnaht nach schroffem Abkühlen, Erwärmen auf eine Temperatur oberhalb der Austenitisierungstemperatur und erneutem schroffen Abkühlen ein mindestens härteidentisches, vorzugsweise härteres Gefüge aufweist als die durch die Schweißung verbundenen Stahlplatinen bzw. Stahlbänder, wobei die Schweißnaht eine Festigkeit aufweist, die im Bereich von 1500 MPa bis 2000 MPa, vorzugsweise im Bereich von 1700 MPa bis 1900 MPa liegt, und wobei die Schweißnaht nach dem schroffen Abkühlen, dem Erwärmen auf eine Temperatur oberhalb der Austenitisierungstemperatur und dem erneuten schroffen Abkühlen eine Festigkeit aufweist, die mindestens gleich, vorzugsweise mindestens 100 MPa, besonders bevorzugt mindestens 200 MPa höher ist als die Festigkeit der durch die Schweißung verbundenen Stahlplatinen oder Stahlbänder.

Untersuchungen haben ergeben, dass die Festigkeit der Schweißnaht beim Laserschweißen durch Einbringen insbesondere von Kohlenstoff in das Schweißschmelzbad erhöht werden kann. Eine bevorzugte Ausgestaltung des erfindungsgemäßen Verfahrens sieht daher vor, dass als viskose Flüssigkeit Öl, insbesondere Mineralöl, und/oder Fett verwendet wird. Diese kohlenstoffhaltigen Flüssigkeiten bzw. feste, pulverartige oder aerosolartige Stoffe, die mindestens eine die Festigkeit der zu erzeugenden Schweißnaht erhöhende Komponente, vorzugsweise Kohlenstoff enthalten, sind relativ kostengünstig erhältlich und lassen sich dem flüssigen Schweißschmelzbad besonders einfach zuführen.

Eine weitere vorteilhafte Ausgestaltung des erfindungsgemäßen Verfahrens ist dadurch gekennzeichnet, dass als viskose Flüssigkeit eine Flüssigkeit verwendet wird, in der Graphitteilchen dispergiert sind. Auf diese Weise lässt sich Kohlenstoff in variabler Konzentration, insbesondere in relativ hoher Konzentration dem flüssigen Schweißschmelzbad zuführen. Die Zuführung ist dabei wiederum sehr einfach möglich, beispielsweise mittels einer Fluidleitung, die entlang des Fügestoßes geführt wird und an demselben beabstandet zum Schweißstrahl mündet. Die Fluidleitung kann dabei im Wesentlichen biegestarr ausgeführt sein, so dass sie zugleich als mechanisches Tastelement zur Führung des Schweißstrahles entlang des Fügestoßes verwendet werden kann.

Das Auftragen der viskosen Flüssigkeit mit dem mindestens einen die Festigkeit der Schweißnaht erhöhenden Element kann auch zeitlich getrennt von dem eigentlichen Schweißprozess in einer von der Schweißvorrichtung unabhängigen Bearbeitungsstation erfolgen. Bevorzugt wird das Auftragen der viskosen Flüssigkeit bzw. des festen, pulverartigen oder aerosolartigen Stoffs, die/der mindestens ein die Festigkeit der Schweißnaht erhöhendes Element, vorzugsweise Kohlenstoff, enthält, aber "inline" durchgeführt, d.h. als mitlaufende bzw. vorgeordnete Bearbeitung in der Schweißanlage. Durch Auftrag der Flüssigkeit nahe dem Arbeitspunkt des Schweißstrahls können die viskose Flüssigkeit zuverlässiger zugeführt und Flüssigkeitsverluste weitestgehend vermieden werden.

Hinsichtlich einer gezielten Zufuhr des die Festigkeit erhöhenden Elements in das flüssige Schweißschmelzbad sowie eines geringen Verbrauchs der das Element enthaltenden Flüssigkeit ist es ferner vorteilhaft, wenn gemäß einer bevorzugten Ausgestaltung des erfindungsgemäßen Verfahrens die Flüssigkeit eine hochviskose oder pastenartige Konsistenz aufweist. Die kinematische Viskosität der das Festigkeit erhöhende Element enthaltenden Flüssigkeit beträgt bei einer Umgebungstemperatur von 20°C beispielsweise mindestens 50 x 10⁻⁶ m²/s, vorzugsweise mindestens 100 x 10⁻⁶ m²/s, besonders bevorzugt mindestens 500 x 10⁻⁶ m²/s.

Eine weitere bevorzugte Ausgestaltung des erfindungsgemäßen Verfahrens sieht vor, dass die Flüssigkeit bzw. der feste, pulverartige oder aerosolartige Stoff hinsichtlich ihres/seines Kohlenstoffgehalts so ausgewählt und/oder eingestellt wird, dass die Schweißnaht nach schroffem Abkühlen, Erwärmen auf eine Temperatur oberhalb der Austenitisierungstemperatur und erneutem schroffen Abkühlen eine Festigkeit aufweist, die mindestens gleich, vorzugsweise mindestens 100 MPa, besonders bevorzugt mindestens 200 MPa höher ist als die Festigkeit der durch die Schweißung verbundenen Stahlplatinen oder Stahlbänder.

Weitere bevorzugte und vorteilhafte Ausgestaltungen des erfindungsgemäßen Verfahrens sind in den Unteransprüchen angegeben.

Nachfolgend wird die Erfindung unter Bezugnahme auf die beiliegende Zeichnung näher erläutert. Es zeigen in schematischer Darstellung:

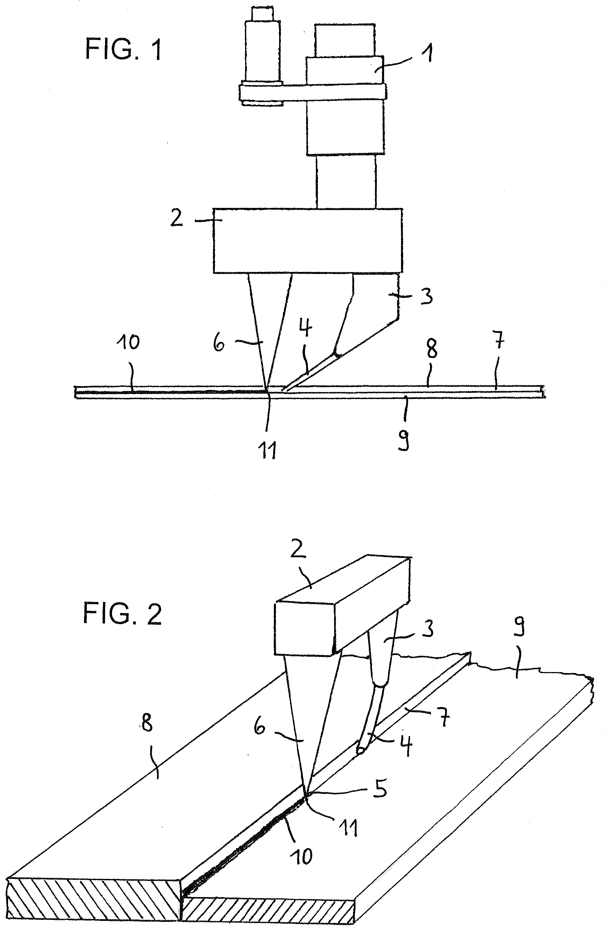

- Fig. 1: eine Laserschweißvorrichtung in Seitenansicht; und
- Fig. 2: eine Laserschweißvorrichtung und zwei im Stumpfstoß aneinanderzufügende Stahlplatinen, in perspektivischer Ansicht.

In der Zeichnung ist ein Teil einer Laserschweißmaschine dargestellt, und zwar eine Zustelleinrichtung 1 für einen Fokussierkopf (Bearbeitungskopf) 2 und eine damit verbundene Zuführeinrichtung 3 zum Auftragen einer viskosen, vorzugsweise hochviskosen Flüssigkeit, die mindestens eine die Festigkeit der zu erzeugenden Schweißnaht 10 erhöhende Komponente, vorzugsweise Kohlenstoff enthält. Bei der Flüssigkeit handelt es sich beispielsweise um eine Kohlenstoff enthaltende Fettpaste, hochviskoses Öl (Mineralöl) oder eine Graphitdispersion. Die Graphitdispersion besteht vorzugsweise aus fein gemahlenem Graphit, der in Öl dispergiert ist.

Das Öl bzw. die Kohlenstoff enthaltende Flüssigkeit wird über eine Fluidleitung 4 zugeführt, die dem Arbeitspunkt (Fokus) 5 des Laserstrahls 6 in Schweißrichtung vorgeordnet ist und an dem Fügestoß 7 mündet, der durch die miteinander zu verschweißenden Stahlbleche 8, 9 definiert wird. Die Fluidleitung 4 ist im Wesentlichen biegestarr ausgebildet und fungiert gleichzeitig als mechanisches Tastelement bzw. Führelement zur Führung des Laserstrahls 6 entlang des Fügestoßes.

Bei den miteinander zu verschweißenden Stahlblechen 8, 9 handelt es sich um Stahlplatinen oder Stahlbänder unterschiedlicher Werkstoffgüte oder Blechdicke. Sie bestehen gemäß der Erfindung aus Mangan-Bor-Stahl, beispielsweise aus Stahl der Sorte 22MnB5. Dieser vergütbare Stahl besitzt nach der Warmumformung hervorragende mechanische Festigkeitseigenschaften. Das aus den Stahlblechen 8, 9 zusammengesetzte Stahlblechprodukt (Tailored Blank) wird anschließend mittels Warmumformung zu einem dreidimensionalen Bauteil, beispielsweise zu einem Fahrzeugtürblech umgeformt.

Durch das Einbringen des Kohlenstoffs und/oder eines anderen die Festigkeit der Schweißnaht 10 erhöhenden Elements in Form von hoch viskosen Ölen bzw. Flüssigkeiten über die aneinanderliegenden Schnittkanten der Stahlbleche 8, 9 in das flüssige Schweißschmelzbad 11 wird gezielt ein in seiner chemischen Zusammensetzung verändertes Primärgefüge im Vergleich zu den Gefügen der Werkstoffe der verbundenen Stahlbleche 8, 9 hergestellt. Vorzugsweise wird dabei zugleich das Schmelzschweißgut durch Anwendung eines Mischgasverfahrens durchmischt. Das auf diese Weise veränderte Primärgefüge der Schweißnaht 10 weist nach Abkühlung (Abschreckung) im Laserschweißprozess, Aufheizung im Warmumformprozess auf eine Temperatur oberhalb der Austenitisierungstemperatur und abschließender Abkühlung ein mindestens härteidentisches, vorzugsweise härteres Sekundärgefüge auf als die durch die Schweißung verbundenen Grundwerkstoffe. Dies gilt sowohl für eine abschließende Abkühlung im Warmumformprozess (direktes Presshärten) als auch für eine indirekte Warmumformung (indirektes Formhärten).

Das Öl bzw. die Kohlenstoff enthaltende Flüssigkeit hinsichtlich seines/ihres Kohlenstoffgehalts so ausgewählt und/oder eingestellt wird, dass die Schweißnaht 10 nach schroffem Abkühlen, Erwärmen auf eine Temperatur oberhalb der Austenitisierungstemperatur und erneutem schroffen Abkühlen eine Festigkeit aufweist, die im Bereich von 1500 MPa bis 2000 MPa, vorzugsweise im Bereich von 1700 MPa bis 1900 MPa liegt.

Verglichen mit den durch die Schweißung verbundenen Stahlplatinen oder Stahlbändern 8, 9 besitzt die Schweißnaht 10 gemäß der Erfindung nach schroffem Abkühlen im Schweißprozess, Erwärmen auf eine Temperatur oberhalb der Austenitisierungstemperatur und erneutem schroffen Abkühlen eine mindestens gleiche, vorzugsweise mindestens 100 MPa, besonders bevorzugt mindestens 200 MPa höhere Festigkeit. Hierzu wird der Massenanteil des Kohlenstoffs in der Schweißnaht 10 auf 0,25 bis 0,40 Gew.-%, vorzugsweise auf 0,30 bis 0,40 Gew.-% erhöht.

Die partielle Erhöhung des Kohlenstoffgehalts in der Schweißnaht 10 bleibt - vorausgesetzt es erfolgt keine erneute Überführung der Schweißnaht 10 in einen schmelzflüssigen Zustand - in allen nachfolgenden Wärmebehandlungen erhalten. Somit wird durch die Wärmebehandlung der Schweißnaht 10 in diesem Bereich ein mindestens härteidentisches, vorzugsweise härteres Gefüge erzielt.

Das höhere Kohlenstoffangebot in der Schweißnaht 10 bzw. definierten Bereichen der Schweißnaht veranlasst den Austenit bei Bildung aus der schmelzflüssigen Phase zur Aufnahme großer Kohlenstoffmengen, wodurch in der Schweißnaht 10 bzw. im definierten Bereich einer Laserschweißnaht ein kohlenstoffreicherer Austenit zur Härtung vorliegt, was sich in einer verbesserten Aufhärtung niederschlägt.

Insbesondere bei der Abpressung von geometrisch hoch komplexen Bauteilen sind der Auslegung der Umformwerkzeuge bezüglich der Herstellung der Formschlüssigkeit Grenzen gesetzt. In solchen Fällen können kritische Bereiche der Schweißnaht gezielt mit höheren Kohlenstoffgehalten legiert werden, um unabhängig von der Formschlüssigkeit und damit Abkühlgeschwindigkeit martensitische Gefüge in der Schweißnaht 10 herzustellen. Auch die gezielte Aufhärtung von Schweißnahtbereichen, die im fertigen Bauteil Sollbruchstellen definieren sollen, kann konstruktiv durch das erfindungsgemäße Verfahren erzielt werden. Denkbar sind in der Anwendung des erfindungsgemäßen Verfahrens auch Auslegungen von Schweißnahtbereichen, die aufgrund besonderer Belastungen eine besonders hohe Festigkeit aufweisen müssen. Mit dem erfindungsgemäßen Verfahren steht zudem eine vergleichsweise kostengünstige Methode der (partiellen) Vermittlung andersartiger Eigenschaften der Schweißnaht 10 zur Verfügung.

Die Ausführung der Erfindung ist nicht auf die vorstehend beschriebenen Ausführungsbeispiele beschränkt. Vielmehr sind zahlreiche Varianten denkbar, die auch bei abweichender Gestaltung von der in den beigefügten Patentansprüchen angegebenen Erfindung Gebrauch machen. So liegt es beispielsweise auch im Rahmen der Erfindung, zum Auftragen des hochviskosen Öls bzw. der hochviskosen kohlenstoffhaltigen Flüssigkeit eine Auftragsrolle anstelle einer am Fügestoß 7 mündenden Fluidleitung 4 zu verwenden. Ebenfalls ist das Aufbringen von festen Stoffen bzw. pulverartigen oder aerosolartigen Stoffen möglich, wodurch die Kennwerte und Eigenschaften der Schweißnaht beim Laserschweißen gezielt eingestellt werden können.

## Patentansprüche

1. Verfahren zur Herstellung von Stahlblechprodukten, bei dem Mangan-Bor-Stahlplatinen oder Mangan-Bor-Stahlbänder unterschiedlicher Dicke und/oder Werkstoffgüte miteinander entlang eines durch Kanten der Stahlplatinen oder Stahlbänder gebildeten Fügestoßes (7) verschweißt werden, **dadurch gekennzeichnet, dass** vor dem Schweißprozess auf mindestens eine Schweißkante der miteinander zu verschweißenden Stahlplatinen oder Stahlbänder (8, 9) zumindest partiell eine viskose Flüssigkeit, insbesondere Paste, oder ein fester, pulverartiger oder aerosolartiger Stoff aufgetragen wird, die/der mindestens eine die Festigkeit der zu erzeugenden Schweißnaht (10) erhöhende Komponente enthält und hinsichtlich ihres/seines Kohlenstoffgehalts so ausgewählt und/oder eingestellt wird, dass durch das Auftragen der viskosen Flüssigkeit oder des festen, pulverartigen oder aerosolartigen Stoffs der Massenanteil des Kohlenstoffs in der Schweißnaht (10) auf 0,25 bis 0,40 Gew.-%, vorzugsweise auf 0,30 bis 0,40 Gew.-% erhöht wird, und dass nach dem Schweißen die Schweißnaht schroff abgekühlt, auf eine Temperatur oberhalb der Austenitisierungstemperatur erwärmt und erneut schroff abgekühlt wird, so dass die Schweißnaht eine Festigkeit aufweist, die im Bereich von 1500 MPa bis 2000 MPa, vorzugsweise im Bereich von 1700 MPa bis 1900 MPa liegt.

2. Verfahren nach Anspruch 1, **dadurch gekennzeichnet, dass** als viskose Flüssigkeit Öl, insbesondere Mineralöl, und/oder Fett verwendet wird.

3. Verfahren nach Anspruch 1 oder 2, **dadurch gekennzeichnet, dass** als viskose Flüssigkeit eine Flüssigkeit verwendet wird, in der Graphitteilchen dispergiert sind.

4. Verfahren nach einem der Ansprüche 1 bis 3, **dadurch gekennzeichnet, dass** die Flüssigkeit oder der feste, pulverartige oder aerosolartige Stoff hinsichtlich ihres/seines Kohlenstoffgehalts so ausgewählt oder eingestellt wird, dass die Schweißnaht (10) nach schroffem Abkühlen, Erwärmen auf eine Temperatur oberhalb der Austenitisierungstemperatur und erneutem schroffen Abkühlen ein mindestens härteidentisches, vorzugsweise härteres Gefüge aufweist als die durch die Schweißung verbundenen Stahlplatinen oder Stahlbänder (8, 9).

5. Verfahren nach einem der Ansprüche 1 bis 4, **dadurch gekennzeichnet, dass** die Flüssigkeit oder der feste, pulverartige oder aerosolartige Stoff hinsichtlich ihres/seines Kohlenstoffgehalts so ausgewählt und/oder eingestellt wird, dass die Schweißnaht (10) nach schroffem Abkühlen, Erwärmen auf eine Temperatur oberhalb der Austenitisierungstemperatur und erneutem schroffen Abkühlen eine Festigkeit aufweist, die mindestens gleich, vorzugsweise mindestens 100 MPa, besonders bevorzugt mindestens 200 MPa höher ist als die Festigkeit der durch die Schweißung verbundenen Stahlplatinen oder Stahlbänder (8, 9).

6. Verfahren nach einem der Ansprüche 1 bis 5, **dadurch gekennzeichnet, dass** das Auftragen der viskosen Flüssigkeit als mitlaufende Bearbeitung neben dem Schweißen durchgeführt wird.

7. Verfahren nach einem der Ansprüche 1 bis 6, **dadurch gekennzeichnet, dass** die miteinander verschweißten Stahlplatinen oder Stahlbänder (8, 9) anschließend, gegebenenfalls nach einer oder mehreren Beschneidungen, mittels Warmumformung zu einem dreidimensionalen Bauteil umgeformt werden.

8. Verfahren nach einem der Ansprüche 1 bis 7, **dadurch gekennzeichnet, dass** die die Festigkeit erhöhende Komponente, vorzugsweise Kohlenstoff enthaltende Flüssigkeit bei einer Umgebungstemperatur von 20°C eine kinematische Viskosität von mindestens 50 x 10⁻⁶ m²/s, vorzugsweise mindestens 100 x 10⁻⁶ m²/s, besonders bevorzugt mindestens 500 x 10⁻⁶ m²/s besitzt.

9. Stahlblechprodukt, welches zur Herstellung eines warmumgeformten Bauteils bestimmt und aus miteinander entlang eines Fügestoßes (7) verschweißter Mangan-Bor-Stahlplatinen oder Mangan-Bor-Stahlbänder (8, 9) unterschiedlicher Dicke und/oder Werkstoffgüte zusammengesetzt ist, **dadurch gekennzeichnet, dass** dessen Schweißnaht (10) einen Kohlenstoffgehalt von mindestens 0,25 bis 0,40 Gew.-%, vorzugsweise von mindestens 0,30 bis 0,40 Gew.-% aufweist, wobei die Schweißnaht (10) nach schroffem Abkühlen, Erwärmen auf eine Temperatur oberhalb der Austenitisierungstemperatur und erneutem schroffen Abkühlen ein mindestens härteidentisches, vorzugsweise härteres Gefüge aufweist als die durch die Schweißung verbundenen Stahlplatinen oder Stahlbänder (8, 9), wobei die Schweißnaht (10) eine Festigkeit aufweist, die im Bereich von 1500 MPa bis 2000 MPa, vorzugsweise im Bereich von 1700 MPa bis 1900 MPa liegt, und wobei die Schweißnaht (10) nach dem schroffen Abkühlen, dem Erwärmen auf eine Temperatur oberhalb der Austenitisierungstemperatur und dem erneuten schroffen Abkühlen eine Festigkeit aufweist, die mindestens gleich, vorzugsweise mindestens 100 MPa, besonders bevorzugt mindestens 200 MPa höher ist als die Festigkeit der durch die Schweißung verbundenen Stahlplatinen oder Stahlbänder (8, 9).

## Claims

1. Method for producing sheet steel products, in which manganese-boron sheet steel blanks or manganese-boron steel strips having different thicknesses and/or material qualities are welded together along a joint (7) formed by edges of the sheet steel blanks or steel strips, **characterised in that** a viscous liquid, in particular a paste, or a solid, powdery or aerosol-like substance is applied, prior to the welding process, to at least part of at least one welding edge of the sheet steel blanks or steel strips (8, 9) to be welded together, which liquid or solid, powdery or aerosol substance contains at least one component that increases the strength of the weld seam (10) to be produced and which is selected and/or set on the basis of its carbon content such that the percent by mass of the carbon in the weld seam (10) is increased to from 0.25 to 0.40 wt.%, preferably to from 0.30 to 0.40 wt.% by applying the viscous liquid or the solid, powdery or aerosol-like substance, and **in that**, following welding, the weld seam is cooled abruptly, heated to a temperature above the austenitising temperature and abruptly cooled again so that the weld seam has a strength in the range of from 1500 MPa to 2000 MPa, preferably in the range of from 1700 MPa to 1900 MPa.

2. Method according to claim 1, **characterised in that** oil, in particular mineral oil, and/or grease is used as the viscous liquid.

3. Method according to either claim 1 or claim 2, **characterised in that** a liquid in which graphite particles are dispersed is used as the viscous liquid.

4. Method according to any of claims 1 to 3, **characterised in that** the liquid or the solid, powdery or aerosol-like substance is selected or set on the basis of its carbon content such that, after having been abruptly cooled, heated to a temperature above the austenitising temperature and abruptly cooled again, the weld seam (10) has a structure that is at least as hard, preferably harder, than the sheet steel blanks or steel strips (8, 9) connected by welding.

5. Method according to any of claims 1 to 4, **characterised in that** the liquid or the solid, powdery or aerosol-like substance is selected and/or set on the basis of its carbon content such that, after having been abruptly cooled, heated to a temperature above the austenitising temperature and abruptly cooled again, the weld seam (10) has a strength which is at least as high, preferably at least 100 MPa, more preferably at least 200 MPa, higher, than the strength of the sheet steel blanks or steel strips (8, 9) connected by welding.

6. Method according to any of claims 1 to 5, **characterised in that** the application of the viscous liquid is carried out concurrently with the welding process.

7. Method according to any of claims 1 to 6, **characterised in that** the sheet steel blanks or steel strips (8, 9) that are welded together are then reshaped to form a three-dimensional component, optionally after one or more trimmings, by means of hot forming.

8. Method according to any of claims 1 to 7, **characterised in that** the liquid containing the strength-increasing constituent, preferably carbon, has a kinematic viscosity of at least 50 x 10⁻⁶ m²/s, preferably at least 100 x 10⁻⁶ m²/s, more preferably at least 500 x 10⁻⁶ m²/s, at an ambient temperature of 20 °C.

9. Sheet steel product that is intended for producing a hot-formed component and is composed of manganese-boron sheet steel blanks or manganese-boron steel strips (8, 9) that are welded together along a joint (7) and have different thicknesses and/or material qualities, **characterised in that** the weld seam (10) thereof has a carbon content of from at least 0.25 to 0.40 wt.%, preferably of from at least 0.30 to 0.40 wt.%, the weld seam (10), after having been abruptly cooled, heated to a temperature above the austenitising temperature and abruptly cooled again, having a structure that is at least as hard, preferably harder, than the sheet steel blanks or steel strips (8, 9) connected by welding, the weld seam (10) having a strength in the range of from 1500 MPa to 2000 MPa, preferably in the range of from 1700 MPa to 1900 MPa, and the weld seam (10), after having been abruptly cooled, heated to a temperature above the austenitising temperature and abruptly cooled again, having a strength which is at least as high, preferably at least 100 MPa, more preferably at least 200 MPa, higher than the strength of the sheet steel blanks or steel strips (8, 9) connected by welding.

## Revendications

1. Procédé de production de produits en tôle d'acier, dans lequel des platines en acier au manganèse-bore ou des bandes d'acier au manganèse-bore d'épaisseur et/ou de qualité de matériau différentes sont soudés ensemble, le long d'un joint ouvert (7) formé par les bords des platines en acier ou des bandes d'acier, **caractérisé en ce que**, avant le processus de soudage, sur au moins un bord de soudure des platines en acier ou des bandes d'acier (8, 9) à souder ensemble, est appliqué, au moins partiellement, un liquide visqueux, en particulier une pâte, ou une matière solide, pulvérulente ou genre aérosol, contenant au moins un composant, qui augmente la résistance du cordon de soudure (10) à exécuter, et qui, en ce qui concerne sa teneur en carbone est choisi et/ou ajusté de sorte que, par l'application du liquide visqueux ou de la matière solide, pulvérulente ou genre aérosol, que le pourcentage en masse du carbone, dans le cordon de soudure (10) soit élevé à 0,25 jusqu'à 0,40 % en poids, de préférence à 0,30 jusqu'à 0,40 % en poids, et que, après le soudage, le cordon de soudure est brutalement refroidi, chauffé à une température située au-dessus de la température d'austénitisation et refroidi de nouveau brutalement, de sorte que le cordon de soudure présente une résistance située dans le domaine de 1500 MPa à 2000 MPa, de préférence dans le domaine de 1700 MPa à 1900 MPa.

2. Procédé selon la revendication 1,
**caractérisé en ce que**, comme liquide visqueux, on utilise de l'huile, de préférence de l'huile minérale, et / ou de la graisse.

3. Procédé selon revendication 1 ou 2,
**caractérisé en ce que**, comme liquide visqueux, on utilise un liquide, dans lequel sont dispersés des particules de graphite.

4. Procédé selon l'une des revendications 1 à 3,
**caractérisé en ce que** le liquide ou la matière solide, pulvérulente ou genre aérosol, en ce qui concerne sa teneur en carbone est choisi et / ou ajusté de sorte que, après le refroidissement brutal, le chauffage à une température située au-dessus de la température d'austénitisation et le nouveau refroidissement brutal, le cordon de soudure (10) présente une structure d'une dureté au moins identique, de préférence plus élevée que celle des platines d'acier ou des bandes d'acier (8, 9) reliés ensemble par soudure.

5. Procédé selon l'une des revendications 1 à 4,
**caractérisé en ce que** le liquide ou la matière solide, pulvérulente ou genre aérosol, en ce qui concerne sa teneur en carbone est choisi et / ou ajusté de sorte que, après le refroidissement brutal, le chauffage à une température située au-dessus de la température d'austénitisation et le nouveau refroidissement brutal, le cordon de soudure (10) présente une résistance, qui est au moins égale, de préférence d'au moins 100 MPa supérieure, en particulier, de préférence, d'au moins 200 MPa supérieure à la résistance des platines d'acier ou des bandes d'acier (8, 9) reliés par soudage.

6. Procédé selon l'une des revendications 1 à 5,
**caractérisé en ce que** l'application du liquide visqueux est exécuté, en tant que traitement couplé, en même temps que le soudage.

7. Procédé selon l'une des revendications 1 à 6,
**caractérisé en ce que** les des platines d'acier ou des bandes d'acier (8, 9) soudés ensemble sont ensuite transformés, par formage à chaud, en en éléments tridimensionnel, le cas échéant après un ou plusieurs découpages.

8. Procédé selon l'une des revendications 1 à 7,
**caractérisé en ce que** les composants augmentant la résistance, de préférence un liquide contenant du carbone, possède, à une température ambiant de 20 °C, une viscosité cinématique d'au moins 50 x 10⁻⁶ m²/s, de préférence d'au moins 100 x 10⁻⁶ m²/s, en particulier, de préférence, d'au moins 500 x 10⁻⁶ m²/s.

9. Produit en tôle d'acier, lequel est destiné à la fabrication d'un composant formé à chaud et est composé de platines d'acier au manganèse-bore ou de bandes d'acier au manganèse-bore (8, 9) d'épaisseur et/ou de qualité de matériau différentes, soudés ensemble le long d'un joint (7), **caractérisé en ce que** son cordon de soudure (10) présente une teneur en carbone d'au moins 0,25 à 0,40 % en poids, de préférence d'au moins 0,30 à 0,40 % en poids, sachant que le cordon de soudure (10), après le refroidissement brutal, le chauffage à une température située au-dessus de la température d'austénitisation et un nouveau refroidissement brutal, présente une structure d'une dureté au moins identique, de préférence plus élevée que celle des platines d'acier ou des bandes d'acier (8, 9) reliés ensemble par soudure, sachant que le cordon de soudure (10) présente une résistance, qui est située dans le domaine de 1500 MPa à 2000 MPa, de préférence dans le domaine de 1700 MPa à 1900 MPa, et sachant que le cordon de soudure (10), après le refroidissement brutal, le chauffage à une température située au-dessus de la température d'austénitisation et le nouveau refroidissement brutal, présente une résistance qui est au moins égale, de préférence d'au moins 100 MPa supérieure, de préférence en particulier d'au moins 200 MPa supérieure à la résistance des platines d'acier ou des bandes d'acier (8, 9) reliés par soudage.
